# EUROPEAN PATENT SPECIFICATION

(11) **EP 2 729 019 B1**
(45) Date of publication and mention of the grant of the patent: **06.09.2017**
(21) Application number: 12753831.2
(22) Date of filing: 06.07.2012
(51) Int. Cl.: A23G 9/36, A23G 9/42, A23G 9/48, A23P 10/35

(54) **FOOD PRODUCT OF THE TYPE TO BE STORED AND CONSUMED REFRIGERATED OR FROZEN**
LEBENSMITTEL GEKÜHLT ODER GEFROREN LAGER- UND KONSUMIERBAR
PRODUIT ALIMENTAIRE POUVANT ÊTRE STOCKÉ ET CONSOMMÉ REFRIGÉRÉ OU CONGELÉ

(30) Priority: 08.07.2011 IT MI20111271
(43) Date of publication of application: 14.05.2014
(73) Proprietor: Milani, Giuseppe, 20138 Milano (IT)
(72) Inventor: Milani, Giuseppe, 20138 Milano (IT)
(74) Representative: Di Bernardo, Antonio
(86) International application number: PCT/IT2012/000207
(87) International publication number: WO 2013/008261

(56) References cited:
- US-A- 5 120 561
- US-A- 5 139 803
- US-A- 5 413 804
- US-A1- 2003 124 181

## Description

The present invention refers to a food product of the type used to store and consume refrigerated or on frozen products.

The present invention is applicable to all products belonging to the cold food chain (such as ice cream or frozen products) or to the industrial semifreddos chain (such as yogurt, fruit juice or milkshakes).

It is well known from the state of the art that many important nutrients for the human diet (such as omega 3.6 and bioflavonoids, flavonolignans) and also many pharmacological substances, exhibit a strong instability due to a high biochemical volatility and a high oxidative aging process and often many of these substances are associated with an unacceptable taste and therefore difficult to introduce into a proper diet.

For example substances such as bioflavonoids and iron have an extremely bitter or metallic taste and their intake is often very difficult especially for children and elderly citizens.

The food products currently present on the market of the type to be stored and consumed refrigerated or frozen, such as ice cream or yogurt, use a method of introducing substances which are normally not pleasant tasting consisting in the conjugation of the nutrient with sweeteners and/or artificial flavours that cover the bad taste and retain their properties or characteristics as much as possible.

The classic method of adding these products however does not completely overcome the problem of introducing unpleasant tasting substances unless done in very minimum quantities with the addition of a large amount of sugar and antagonistic products such as sweeteners and artificial flavours, resulting in a major deterioration of the characteristics of the food product.

Furthermore, the classic method of introduction is also associated with a low absorbability of the substances which in some cases are picked up by the intestinal mucosa only in very low doses with a reduced bioavailability.

US5413804 and US5120561 disclose that liposomes can be used as encapsulating agents for carrying food additives.

US2003124181 discloses that liposomes containing at least 1 mol % of negatively charged lipids may be frozen safely.

The technical aim of the present invention is therefore to realize a food product of the type to be stored and consumed refrigerated or frozen that which enables elimination of the technical drawbacks of the prior art.

An aim of the present invention is to realize a food product of the type to be stored and consumed refrigerated or frozen that maintains the essential biochemical characteristics of the substances eaten.

Another aim of the present invention is to realize a food product of the type to be stored and consumed refrigerated or frozen which increases the performance of the substances eaten.

A further aim of the present invention is to realize a food product of the type to be stored and consumed refrigerated or frozen which allows the assimilation of nutrients known to be unpleasant tasting, covering the unpleasant taste without the need to alter the characteristics of the finished food product through the addition of sweeteners and artificial flavours.

Yet another aim of the present invention is to realize a food product of the type to be stored and consumed refrigerated or frozen that increases the bioavailability and absorption of the nutrient to be introduced.

The technical task, as well as these and other aims, according to the present invention are achieved by realizing a food product of the type to be stored and consumed refrigerated or frozen which includes at least a first liposome and at least one active ingredient encapsulated in the first liposome, which in turn has the first means of increasing its encapsulation capacity and its stability and second means of increasing its antioxidant capacity.

Preferably the first liposome comprises phosphatidylcholine in a high concentration and in particular, in a range of between 45-95% by weight.

More in particular, the first liposome comprises also:
- Phosphatidylethanolamine in a range of between 20-24% by weight
- Phosphatidylserine in a range of between 0-10% by weight
- Phosphatidilglicherols in a range of between 5-25% by weight
- Phosphatidylinositol in a range of between 8-22% by weight
- Phosphatidic acids in a range of between 4-12% by weight
- Monounsaturated fatty acids in a range of between 6-8% by weight
- Linoleic acid in a range of between 68-72% by weight
- Linolenic acid in a range of between 7-9% by weight
The first means for increasing the encapsulation capacity and the stability of the first liposome comprise at least one polysaccharide and/or at least one protein and/or at least one polypeptide and/or at least a plant protein and/or at least one plant sterol and/or at least cholesterol. The second means for increasing the antioxidant capacity of the first liposome are a synergistic mixture comprising:
- D-alfa-tocopherols in a range of between 0,5-3% by weight
- Rosmarinic acid in a percentage by weight of 0,1%
- Lecithin in a range of between 1-3% by weight

Preferably the active ingredient is a nutritional-dietetic substance comprising at least one among bioflavonoids, essential amino acids, vitamins or polyunsaturated fatty acids.

Preferably the active ingredient is a pharmacological substance comprising at least one among an anti-inflammatory, an immunostimulant, an antidiabetic agent, or a cytostatic. The food product comprises at least a second liposome that encapsulates the first liposome.

Preferably, the second liposome comprises phosphatidylcholine in a high concentration and in particular in a range of between 70-98% by weight.

In particular, the second liposome comprises means for increasing the efficacy of the first and the second means of the first liposome.

More in particular, the means for increasing the efficacy comprise vegetable chitins in a range of between 0,1 - 3% by weight and plant sterols in a range of between 0,3 - 0,9% by weight.

Preferably, the second liposome in the first production phases is a gel-like solution able to became subsequently layered on the surface of the first liposome.

The present invention also reveals a procedure for the production of a food product of the type to be stored and consumed refrigerated or frozen comprising a first step of mixing the active ingredient to be encapsulated in the first liposome with the first liposome itself at a PH in a range of between 5 and 7,5, a second step of homogenization, designed to increase the temperature of the first liposome until exceeding its transition temperature for the encapsulation of the active ingredient, and a third step for forming the second liposome, at a PH in a range of between 3,5 to 5, a fourth step of high speed mechanical homogenization alternating with low-speed planetary dispersing cycles at a PH in the range of 3,5 to 8 designed to achieve the encapsulation of the first liposome in the second liposome, and a fifth step of mixing the second liposome encapsulating the first liposome which in turn encapsulates the active ingredient with the food product so as to maintain the first and the second liposome in a thermal state which is permanently below the transition temperature thereof until the food product is consumed.

The phospholipid mixture used to form the liposome encapsulating the active ingredient is optimized on the basis of the edible vehicle, or food product used (ice cream, yogurt, milk, etc.) and is formulated in line with the physical and chemical characteristics of the active ingredient and with the functional purposes that the product obtained should perform.

The active ingredient encapsulated is chosen depending on the commercial target.

In the case in which the purpose is of dietetic- nutritional nature, then dietetic-nutritional substances are used, such as bioflavonoids, essential amino acids or polyunsaturated fatty acids.

In the case in which the purpose is therapeutic, then the active ingredient is a pharmacological product such as cytostatic drugs, anti-inflammatory products, anti-diabetic products and immunostimulants.

The first and preferred realisation of the invention provides for the preparation of the food product according to the usual methods and separately the liposomisation of the active ingredient to be introduced.

The procedure for liposomisation provides several phases.

During the first phase, the active ingredient is added to the phospholipid mixture which forms the first liposome formulated in line with the chemical-physical characteristics of the active ingredient.

During this initial phase, after having stabilized the PH in a range between 5 and 7,5, a mixture of antioxidants is added to guarantee adequate protection from degradation and rheological modifiers are added to provide the liposome with the prerogatives of visco-elacticity needed to increase the encapsulation capacity.

The complex obtained is maintained under ultrasonic homogenization and/or mechanical and/or two-stage high pressure in a refrigerated environment until the controls in line does not reflect a homogeneity of the product obtained and an optimal encapsulation.

The second phase of the procedure for liposomisation always takes place in a refrigerated environment with a reduction of the PH within a range between 3,5 and 5. Adequate doses of natural mucopolysaccharides and/or solidifying plant agents and/or amino acids are added to the complex obtained during the first phase and the homogenisation is repeated.

Initially, low quantities of energy are supplied in order to avoid injuring the liposomic micelles which are created during the first phase, prolonging the procedure of a long period of time until a homogeneous distribution is obtained, in the extra-micelles spaces, of the substances added to the mixture obtained after the first phase.

The occupation of these spaces enables an improved compactness and an increased homogeneity of the liposome mass.

In this way the removal of possible air bubbles incorporated during the first phase is also obtained and the creation of a visco-elastic environment from which the liposomic micelles, homogeneously dispersed, receive proper protection from possible damage which could cause breakage.

A suitable shelter is also obtained from external agents such as oxygen, ultraviolet radiation, etc.

Once a structure is reached , after evaluation under a microscope, showing a perfect homogeneity, it is possible to proceed with the final phase.

During this phase the PH is increased to reach a value in the range from 3,5 to 8 to obtain a suitable viscosity of the mass of the mixture. Therefore it is possible to proceed, by subjecting the mass under vacuum at not less than 600 mm/Hg, in a refrigerated environment, to short cycles (1-5 min) of high speed mechanical homogenisation, alternated with low-speed planetary dispersing cycles (5-25 min).

During the short cycles at the higher energy, a partial deployment of the system is obtained which causes a resizing in the liposomic micelles while the lower energy phases favour the formation of bonds such as Van der Waals and/or Bungenberg de Jong and/or electrostatic which, by interacting between the molecule constituting the external environment, which is in a gel state, and the surface of the liposomic micelles, causes the formation of a stratification of the first on the surface of the latter determining in this manner a double encapsulation of the active ingredient.

At this point, with the appropriate adjustments to the PH caused through the addition of an open chain of amino acids with two amino groups (Arginine, Lysine, etc.) and/or amino acids with two carboxyl groups (Aspartic Acid, Glutamic Acid), and maintaining a very slow planetary agitation, and keeping the temperature within a range of -5 / + 5 °C, within 2-8 hours the formation of elastic vesicles able to intake one or two liposomic vesicles is obtained.

Liposomal structures obtained from lecithins with a more or less important concentration of phospholipids have been acknowledged as capable for the encapsulation of active principals and a subsequent increase of their shelf-life.

However often these liposomes, which for clarification purposes we will call "classic", are not particularly suitable in maintaining a high capacity for retaining or entrapping the active substances.

The elaboration of the liposomes through this invention enables a further increase in the quantities encapsulated and the protection of the active ingredient, without damaging the entrapment properties.

The following tests were performed to quantitatively assess this increase in performance.

### EXAMPLE 1

As a test sample, a liposomal structure under study was used, containing Rose Hip Oil (RML) in the percentage of 5% by weight as the active ingredient in the presence of a mixture of substances comprising:
- D-alfa-tocopherols in a range of between 0,5-3% by weight
- Rosmarinic acid in a percentage of 0,1 % by weight
- Lecithin in a range of between 1-3% by weight.

As a standard sample for comparison purposes (Witness) a classic liposome was used, normally found on sale, in which the same Hip Rose Oil was trapped in the proportion of 5% in the presence of classic antioxidants (Vitamin E, Butylhydroxyanisole (BHA) and Butylated hydroxytoluene (BHT)).

The two complexes were subjected to oxidative stress produced by UVA and to induced free radical attack.

Following the oxidative stress and the free radical attack, the increase in peroxides was measured in both samples in order to check the percentage of the Hip Rose oil that had passed the oxidative stress and the free radical attack without damage.

The results obtained from the tests are as follows:

| Product | Post UVA irradiation | Post radical reaction |
|---|---|---|
| LRM | 55% | 40% |
| Witness | 24% | 18% |

The liposomic structure under study (liposome LRM) shows a percentage of the active non-degraded ingredient higher than the reference sample - Witness.

### EXAMPLE 2

As a sample test, a liposomal structure containing Vitamin A (LVA) in the percentage of 0.7% as active ingredient was used, in the presence of substances comprising:
- D-alfa-tocopherols in a range of between 0,5-3% by weight
- Rosmarinic acid in a percentage of 0,1% by weight
- Lecithin in a range of between 1-3% by weight.

As reference sample (Witness), a "classic" liposome normally available on the market was used, in which the same Vitamin A was trapped in a percentage of 0,7%, in the presence of classic antioxidants (Vitamina E, Butylhydroxyanisole (BHA) and Butylated hydroxytoluene (BHT)).

Both samples were subjected to oxidative stress produced by UVA and induced free radical attack.

Following the oxidative stress and the free radical attack, we measured the increase in peroxides in both samples in order to check the percentage of Vitamin A which had passed the oxidative stress and free radical attack without damage.

The results obtained are the following:

| Product | Post UVA irradiation | Post Radical reaction |
|---|---|---|
| LVA | 64% | 66% |
| Witness | 23% | 14% |

The liposome LVA shows a percentage of active non-degraded ingredient significantly higher compared to the standard reference sample (Witness) highlighting the antioxidative properties of the liposomal structure under study.

Further tests were conducted in order to objectively confirm the eventual maintenance of the entrapament capabilities.

### EXAMPLE 3

As a test sample, a liposomic structure under study was used, containing Rose Hip Oil (LRM) in the percentage of 5% .

As a standard reference sample (Witness), a "classic" liposome normally available on the market was used, in which the same Rose Hip Oil was entrapped in the percentage of 5%.

The two samples were subjected to a challenge consisting in an accelerated aging process in a thermostat at 28°C for 5 days.

On the sixth day, they were subjected to centrifugation and the percentage of the supernatant active ingredient (Rose Hip Oil) was calculated.

The results of the test show how the sample under study revealed a very low release of active ingredient, less than 3% of the total, whereas the Witness sample showed a release equal to 23% of the active principal.

### EXAMPLE 4

The same test as in Example 3 was performed in conditions of thermal stress in order to simulate an accidental increase in storage temperatures. For this purpose, it was carried out for one day in the heat at 25°C and another day in the heat at 4°C for a total of 3 full cycles (6 days).

The results of the tests showed that the sample under study showed a supernatant amount of active ingredient of about 4,4%, whereas the Witness shows a release of the active ingredient of over 80%.

In conclusion, based on the results obtained, it can be stated that the nature of the second edible and biodegradable liposome ensures the release of the first liposome which carries the active ingredient and both participate in synergy to safeguard the functional characteristics and the chemical-physical integrity of the active ingredients contained in them, helping to increase the performance considerably.

## Claims

1. A food product of the type to be stored and consumed refrigerated or frozen, the food product comprising a first liposome, at least one active ingredient encapsulated in the first liposome, said first liposome further having first means for increasing its encapsulation capacity and stability and second means for increasing its antioxidant capacity, **characterized in that** the food product further comprises at least a second liposome encapsulating the first liposome and **in that** the active ingredient comprises polyunsaturated fatty acids; and **in that** said first means for increasing encapsulation capacity and stability of the first liposome comprise at least one polysaccharide and/or at least one protein and/or at least one polypeptide and/or at least a plant pectin and/or at least one plant sterol and/or at least cholesterol; and **in that** said second means for increasing the antioxidant capacity of said first liposome are a synergic mixture comprising:
- D-alpha-tocopherols in a range of between 0.5-3% by weight
- Rosmarinic acid in a percentage by weight of 0.1%
- Lecithin in a range of between 1-3% by weight.

2. The food product of the type to be stored and consumed refrigerated or frozen according to claim 1, **characterized in that**
said first liposome comprises phosphatidylcholine in a high concentration, namely in a range of between 45-95% by weight.

3. The food product of the type to be stored and consumed refrigerated or frozen according to the preceding claim, **characterized in that** said second liposome comprises phosphatidylcholine in a range of between 70-98% by weight.

4. The food product of the type to be stored and consumed refrigerated or frozen according to any one of claims 1 or 2 or 3, **characterized in that** said second liposome comprises means for increasing the efficacy of said first and second means of said first liposome, said means for increasing the efficacy comprising vegetable chitin in a range between 0.1-3% by weight and plant sterol in a range of between 0.3-0.9% by weight.

5. The food product of the type to be stored and consumed refrigerated or frozen according to any one of claims 1-6, **characterized in that** said at least a second liposome, in the first production phases, is a gel-like solution able to become subsequently layered on the surface of said at least a first liposome.

6. A procedure for producing a food product of the type to be stored and consumed refrigerated or frozen, **characterized in that** it comprises a first phase of liposomization of an active ingredient and second phase of mixing the liposomised active ingredient with the food product so as to maintain it in a thermal state which is permanently below the transition temperature thereof until the food product is consumed, wherein a first phase of liposomization of an active ingredient comprises:
a) mixing an active ingredient to a phospholipid mixture which forms a first liposome,
b) after having stabilized the pH of the mixture in a range of between 5 and 7.5, adding a mixture of antioxidants and of rheological modifiers,
c) maintaining the mixture so obtained under ultrasonic homogenization and/or mechanical and/or two-stage high pressure in a refrigerated environment, with a reduction of the PH within a range between 3.5 and 5, until a predetermined homogeneity of the mixture is obtained,
d) alternating high-speed mechanical homogenization cycles with low-speed planetary dispersing cycles at a pH in the range of between 3.5 and 8, in a refrigerated environment and under vacuum at not less than 600mm/Hg, so as to obtain a double encapsulation of the active ingredient,
e) adding an open chain of amino acids with two amino groups and/or amino acids with two carboxyl groups, maintaining a very slow planetary agitation, and keeping the temperature within a range of -5 / + 5 °C , for 2-8 hours.

7. The procedure according to claim 6, wherein the two amino acids added at step e) are Arginine or Lysine.

8. The procedure according to claim 6 or 7, wherein the amino acids with two carboxyl groups added at step e) are Aspartic Acid and Glutamic Acid.

9. The procedure according to claim 6 or 7 or 8, further comprises a step of adding natural mucopolysaccharides and/or solidifying plant agents and/or amino acids to the complex obtained after step c), and then repeating step c).

10. The procedure according to claim 6 or 7 or 8 or 9, wherein high-speed mechanical homogenization cycles of step d) last for 1-5 minutes each.

11. The procedure according to claim 6 or 7 or 8 or 9 or 10, wherein low-speed planetary dispersing cycles of step d) last for 5-25 minutes each.

12. The procedure according to 6 or 7 or 18 or 9 or 10 or 11, wherein planetary agitation of step e) is maintained for 2-8 hours.

13. The procedure according to 6 or 7 or 8 or 9 or 10 or 11, wherein the active ingredient comprises polyunsaturated fatty acids.

## Patentansprüche

1. Nahrungsmittelprodukt der Art, die gekühlt oder gefroren aufbewahrt und verzehrt werden soll, umfassend ein erstes Liposom, zumindest einen Wirkstoff, der im ersten Liposom eingekapselt ist, wobei das erste Liposom ferner erste Mittel zum Erhöhen seiner Einkapselungskapazität und -stabilität und zweite Mittel zum Erhöhen seiner Antioxidanskapazität aufweist, **dadurch gekennzeichnet, dass** das Nahrungsmittelprodukt ferner zumindest ein zweites Liposom umfasst, das das erste Liposom einkapselt, und dass der Wirkstoff mehrfach ungesättigte Fettsäuren umfasst, und dass die ersten Mittel zum Erhöhen der Einkapselungskapazität und -stabilität des ersten Liposoms zumindest ein Polysaccharid und/oder zumindest ein Protein und/oder zumindest ein Polypeptid und/oder zumindest ein pflanzliches Pectin und/oder zumindest ein pflanzliches Sterol und/oder zumindest Cholesterin umfassen;
und dass die zweiten Mittel zum Erhöhen der Antioxidanskapazität des ersten Liposoms eine synergetische Mischung sind, die folgendes umfasst:
- D-Alpha-Tocopherole in einem Bereich zwischen 0,5 bis 3 Gewichtsprozent
- Rosmarinsäure in einem Gewichtsprozentanteil von 0,1%
- Lecithin in einem Bereich zwischen 1 bis 3 Gewichtsprozent.

2. Nahrungsmittelprodukt der Art, die gekühlt oder gefroren aufbewahrt und verzehrt werden soll, nach Anspruch 1, **dadurch gekennzeichnet, dass** das erste Liposom Phosphatidylcholin in einer hohen Konzentration umfasst, nämlich in einem Bereich zwischen 45 bis 95 Gewichtsprozent.

3. Nahrungsmittelprodukt der Art, die gekühlt oder gefroren aufbewahrt und verzehrt werden soll, nach einem der vorhergehenden Ansprüche, **dadurch gekennzeichnet, dass** das zweite Liposom Phosphatidylcholin in einem Bereich zwischen 70 bis 98 Gewichtsprozent umfasst.

4. Nahrungsmittelprodukt der Art, die gekühlt oder gefroren aufbewahrt und verzehrt werden soll, nach einem der Ansprüche 1 oder 2 oder 3, **dadurch gekennzeichnet, dass** das zweite Liposom Mittel zum Erhöhen der Wirksamkeit der ersten und zweiten Mittel des ersten Liposoms umfasst, wobei die Mittel zum Erhöhen der Wirksamkeit pflanzliches Chitin in einem Bereich zwischen 0,1 bis 3 Gewichtsprozent und pflanzliches Sterol in einem Bereich zwischen 0,3 bis 0,9 Gewichtsprozent umfassen.

5. Nahrungsmittelprodukt der Art, die gekühlt oder gefroren aufbewahrt und verzehrt werden soll, nach einem der Ansprüche 1 bis 6, **dadurch gekennzeichnet, dass** das zumindest eine zweite Liposom in den ersten Erzeugungsphasen eine gelartige Lösung ist, die anschließend auf die Oberfläche des zumindest einen ersten Liposoms geschichtet werden kann.

6. Verfahren zum Erzeugen eines Nahrungsmittelprodukts der Art, die gekühlt oder gefroren aufbewahrt und verzehrt werden soll, **dadurch gekennzeichnet, dass** es eine erste Phase des Liposomierens eines Wirkstoffs und eine zweite Phase des Mischens des liposomierten Wirkstoffs mit dem Nahrungsmittelprodukt umfasst, um es in einem thermischen Zustand zu halten, der permanent unterhalb der Übergangstemperatur desselben liegt, bis das Nahrungsmittelprodukt verzehrt wird, wobei eine erste Phase des Liposomierens eines Wirkstoffs folgendes umfasst:
a) Mischen eines Wirkstoffs zu einer Phospholipidmischung, die ein erstes Liposom ausbildet,
b) nach dem Stabilisieren des pH der Mischung in einem Bereich zwischen 5 und 7,5, Zugeben einer Mischung von Antioxidantien und rheologischen Modifizierern,
c) Erhalten der derart erzielten Mischung unter Ultraschallhomogenisierung und/oder mechanischem und/oder zweistufigem Hochdruck in einer gekühlten Umgebung, mit einer Reduktion des pH innerhalb eines Bereichs zwischen 3,5 und 5, bis eine vorgegebene Homogenität der Mischung erzielt ist,
d) Abwechseln von mechanischen Hochgeschwindigkeitshomogenisierungszyklen mit planetarischen Niedergeschwindigkeitsdispersionszyklen auf einem pH in einem Bereich zwischen 3,5 und 8, in einer gekühlten Umgebung und unter Vakuum von nicht weniger als 600 mm/Hg, um eine doppelte Einkapselung des Wirkstoffs zu erzielen,
e) Zugeben einer offenen Kette von Aminosäuren mit zwei Aminogruppen und/oder Aminosäuren mit zwei Carboxylgruppen, Beibehalten eines sehr langsamen, planetarischen Rührens und Halten der Temperatur innerhalb eines Bereichs von - 5/+5 °C für 2 bis 8 Stunden.

7. Verfahren nach Anspruch 6, wobei die zwei Aminosäuren, die bei Schritt e) zugegeben werden, Arginin oder Lysin sind.

8. Verfahren nach einem der Ansprüche 6 oder 7, wobei die Aminosäuren mit zwei Carboxylgruppen, die bei Schritt e) zugegeben werden, Asparaginsäure und Glutaminsäure sind.

9. Verfahren nach einem der Ansprüche 6 oder 7 oder 8, ferner umfassend einen Schritt des Zugebens von natürlichen Mucopolysacchariden und/oder pflanzlichen Verfestigungsstoffen und/oder Aminosäuren zu dem Komplex, der nach Schritt c) erzielt wurde, und dann Wiederholen von Schritt c).

10. Verfahren nach einem der Ansprüche 6 oder 7 oder 8 oder 9, wobei mechanische Hochgeschwindigkeitshomogenisierungszyklen von Schritt d) jeweils 1 bis 5 Minuten dauern.

11. Verfahren nach einem der Ansprüche 6 oder 7 oder 8 oder 9 oder 10, wobei planetarische Niedergeschwindigkeitsdispersionszyklen von Schritt d) jeweils 5 bis 25 Minuten dauern.

12. Verfahren nach einem der Ansprüche 6 oder 7 oder 8 oder 9 oder 10 oder 11, wobei planetarisches Rühren von Schritt e) für 2 bis 8 Stunden beibehalten wird.

13. Verfahren nach einem der Ansprüche 6 oder 7 oder 8 oder 9 oder 10 oder 11, wobei der Wirkstoff mehrfach ungesättigte Fettsäuren umfasst.

## Revendications

1. Produit alimentaire du type de ceux devant être stockés et consommés réfrigérés ou congelés, le produit alimentaire comprenant un premier liposome, au moins un ingrédient actif encapsulé dans le premier liposome, ledit premier liposome ayant en outre des premiers moyens pour augmenter sa capacité d'encapsulation et sa stabilité et des seconds moyens pour augmenter sa capacité anti-oxydante, **caractérisé par le fait que** le produit alimentaire comprend en outre au moins un second liposome encapsulant le premier liposome, et **par le fait que** l'ingrédient actif comprend des acides gras polyinsaturés ; et **par le fait que** lesdits premiers moyens pour augmenter la capacité d'encapsulation et la stabilité du premier liposome comprennent au moins un polysaccharide et/ou au moins une protéine et/ou au moins un polypeptide et/ou au moins une pectine végétale et/ou au moins un stérol végétal et/ou au moins du cholestérol ;
et **par le fait que** lesdits seconds moyens pour augmenter la capacité anti-oxydante dudit premier liposome sont un mélange synergique comprenant :
- des D-alpha-tocophérols dans une plage d'entre 0,5 et 3 % en poids ;
- de l'acide rosmarinique dans un pourcentage en poids de 0,1 % ;
- de la lécithine dans une plage d'entre 1 et 3 % en poids.

2. Produit alimentaire du type de ceux devant être stockés et consommés réfrigérés ou congelés selon la revendication 1, **caractérisé par le fait que** ledit premier liposome comprend de la phosphatidylcholine à une concentration élevée, à savoir dans une plage d'entre 45 et 95 % en poids.

3. Produit alimentaire du type de ceux devant être stockés et consommés réfrigérés ou congelés selon les revendications précédentes, **caractérisé par le fait que** ledit second liposome comprend de la phosphatidylcholine dans une plage d'entre 70 et 98 % en poids.

4. Produit alimentaire du type de ceux devant être stockés et consommés réfrigérés ou congelés selon l'une quelconque des revendications 1 ou 2 ou 3, **caractérisé par le fait que** ledit second liposome comprend des moyens pour augmenter l'efficacité desdits premiers et seconds moyens dudit premier liposome, lesdits moyens pour augmenter l'efficacité comprenant de la chitine végétale dans une plage d'entre 0,1 et 3 % en poids et du stérol végétal dans une plage d'entre 0,3 et 0,9 % en poids.

5. Produit alimentaire du type de ceux devant être stockés et consommés réfrigérés ou congelés selon l'une quelconque des revendications 1 à 6, **caractérisé par le fait que** ledit au moins un second liposome, dans les premières phases de production, est une solution de type gel apte à être ensuite étalée en couche sur la surface dudit au moins un premier liposome.

6. Procédé de fabrication d'un produit alimentaire du type de ceux devant être stockés et consommés réfrigérés ou congelés, **caractérisé par le fait qu'**il comprend une première phase de liposomisation d'un ingrédient actif et une seconde phase de mélange de l'ingrédient actif liposomisé avec le produit alimentaire de façon à le maintenir dans un état thermique qui est de façon permanente au-dessous de la température de transition de celui-ci jusqu'à ce que le produit alimentaire soit consommé, une première phase de liposomisation d'un ingrédient actif consistant à :
a) mélanger un ingrédient actif à un mélange de phospholipides qui forme un premier liposome ;
b) après avoir stabilisé le pH du mélange dans une plage d'entre 5 et 7,5, ajouter un mélange d'anti-oxydants et de modificateurs rhéologiques ;
c) maintenir le mélange ainsi obtenu sous homogénéisation par ultrasons et/ou haute pression mécanique et/ou à deux étages dans un environnement réfrigéré, avec une réduction du pH dans une plage d'entre 3,5 et 5, jusqu'à ce qu'une homogénéité prédéterminée du mélange soit obtenue ;
d) alterner des cycles d'homogénéisation mécanique à grande vitesse avec des cycles de dispersion planétaire à faible vitesse à un pH dans la plage d'entre 3,5 et 8, dans un environnement réfrigéré et sous vide à pas moins de 600 mm/Hg, de façon à obtenir une double encapsulation de l'ingrédient actif ;
e) ajouter une chaîne ouverte d'acides aminés avec deux groupes amino et/ou d'acides aminés avec deux groupes carboxyle, maintenir une agitation planétaire très lente, et maintenir la température dans une plage de -5/+5 °C pendant 2 à 8 heures.

7. Procédé selon la revendication 6, dans lequel les deux acides aminés ajoutés à l'étape e) sont l'Arginine ou la Lysine.

8. Procédé selon l'une des revendications 6 ou 7, dans lequel les acides aminés avec deux groupes carboxyle ajoutés à l'étape e) sont l'Acide Aspartique et l'Acide Glutamique.

9. Procédé selon l'une des revendications 6 ou 7 ou 8, comprenant en outre une étape consistant à ajouter des mucopolysaccharides naturels et/ou des agents végétaux de solidification et/ou des acides aminés au complexe obtenu après l'étape c), puis à répéter l'étape c).

10. Procédé selon l'une des revendications 6 ou 7 ou 8 ou 9, dans lequel les cycles d'homogénéisation mécanique à grande vitesse de l'étape d) durent 1 à 5 minutes chacun.

11. Procédé selon l'une des revendications 6 ou 7 ou 8 ou 9 ou 10, dans lequel les cycles de dispersion planétaire à faible vitesse de l'étape d) durent 5 à 25 minutes chacun.

12. Procédé selon l'une des revendications 6 ou 7 ou 8 ou 9 ou 10 ou 11, dans lequel l'agitation planétaire de l'étape e) est maintenue pendant 2 à 8 heures.

13. Procédé selon l'une des revendications 6 ou 7 ou 8 ou 9 ou 10 ou 11, dans lequel l'ingrédient actif comprend des acides gras polyinsaturés.
